# EUROPÄISCHE PATENTSCHRIFT

(11) **EP 4 267 431 B1**
(45) Veröffentlichungstag und Bekanntmachung des Hinweises auf die Patenterteilung: **15.10.2025**
(21) Anmeldenummer: 21834721.9
(22) Anmeldetag: 16.12.2021
(51) Int. Cl.: B60P 7/08, B60J 5/06

(54) **PLANE UND NUTZFAHRZEUG MIT EINER SOLCHEN PLANE**
TARPAULIN AND UTILITY VEHICLE HAVING SUCH A TARPAULIN
BÂCHE ET VÉHICULE UTILITAIRE ÉQUIPÉ D'UNE TELLE BÂCHE

(30) Priorität: 23.12.2020 DE 102020134925
(43) Veröffentlichungstag der Anmeldung: 01.11.2023
(73) Patentinhaber: CTV GmbH & Co KG, 48619 Heek (DE)
(72) Erfinder: SCHMITZ, Peter, 48341 Altenberge (DE)
(74) Vertreter: Eckhardt, Dorothea
(86) Internationale Anmeldenummer: PCT/DE2021/101012
(87) Internationale Veröffentlichungsnummer: WO 2022/135634

(56) Entgegenhaltungen:
- EP-A1- 3 015 311
- DE-A1- 102017 106 126
- DE-A1- 102017 115 890
- US-A1- 2006 273 615

## Beschreibung

Die vorliegende Erfindung betrifft eine Plane mit zumindest einer Seitenplane für einen Aufbau eines Nutzfahrzeuges, insbesondere für den Aufbau eines Trailers eines Sattelzuges, mit auf einer zur Fahrzeuginnenseite gerichteten Fläche der Seitenplane aufgeschweißten Quergurten, Längsgurten und/oder Diagonalgurten, welche zum Spannen der Seitenplane und zur Verstärkung und zur Erhöhung der Festigkeit der Seitenplane dienen, nach Anspruch 1, sowie ein Nutzfahrzeug mit einem Aufbau, insbesondere Planenaufbau, insbesondere ein Trailer eines Sattelzuges, mit zumindest einer Seitenplane, die sich in Längsrichtung des Nutzfahrzeuges erstreckt, nach Anspruch 9.

Bekannte Planen für Nutzfahrzeuge sind zumeist als Flächengebilde mit zumindest einer flächigen textilen Einlage ausgestaltet, die in eine Matrix aus Kunststoff eingebettet ist. Eine solche Plane ist beispielsweise aus der DE 197 54 238 C1 bekannt.

Ebenso betrifft die Erfindung einen mit einer solchen Plane ausgestatteten Aufbau für ein Nutzfahrzeug, insbesondere für einen Trailer eines Sattelzuges. Aufbauten dieser Art sind beispielsweise in der EP 3 015 311 A1, DE 19720 525 C2 und DE 20 2006 003 548 U1 beschrieben. Eine weitere Plane zur Ladungssicherung ist in US 2006/273615 A1 offenbart.

In der Praxis eingesetzte Planen für Trailer weisen üblicherweise ein Planengrundgewebe auf, das aus Polyesterfäden gewoben und mit PVC (Polyvinylchlorid) beschichtet ist. Das Grundgewebe stellt ein textiles Flächengebilde dar, welches in der Praxis als "Polyestergewebe" bezeichnet wird. Eine auf das Polyestergewebe aufgebrachte PVC-Beschichtung schützt das Ladegut vor Witterungseinflüssen, wie Nässe und Schmutz. Des Weiteren lässt sich die PVC-Beschichtung nach den Wünschen der jeweiligen Nutzer einfärben. Auch können auf die PVC-Beschichtung zu Werbezwecken Beschriftungen oder Bilder aufgebracht werden.

Um die Nutzfahrzeug-Aufbauten möglichst leicht zu gestalten, sollen die von den Aufbauten getragenen Planen bei vielen in der Praxis eingesetzten Konstruktionen selbst eine aussteifende Funktion übernehmen. Auch sollen die Planen eine ausreichende Festigkeit besitzen, um sie bei geschlossenem Aufbau so spannen zu können, dass die Seiten- und Dachflächen des Aufbaus möglichst glatt sind. Diese Anforderungen können dadurch erfüllt werden, dass die aus einem Polyestergewebe mit einer PVC-Beschichtung bestehenden Planen zumindest an den Stellen, die im praktischen Einsatz besonderen Belastungen unterworfen sind, zusätzlich verstärkt werden. Dazu werden an den betreffenden Stellen sogenannte "Quer-", "Längs-" oder "Diagonalgurte" auf die Plane aufgeschweißt. Zudem ist beispielsweise von Schmitz Cargobull eine sogenannte Powerplane mit in Taschen eingelegten hoch zugfesten Gurten als Zurrmittel zur Ladungssicherung, insbesondere zur Sicherung einer Teilbeladung, in und entgegen der Fahrtrichtung des Fahrzeuges bekannt.

Ladungssicherungseinrichtungen sind in verschiedenen Ausführungen bekannt. Sie dienen dazu, mit den Nutzfahrzeugen zu transportierende Ladung gegen ein versehentliches Verrutschen zu sichern. Dazu weisen die Ladungssicherungseinrichtungen sogenannte Zurrmittel auf, an denen die Ladungssicherungsmittel befestigt werden können, welche die Ladung in Position halten. Als Ladungssicherungsmittel kommen insbesondere Zurrgurte, Seile, Netze, Ladebalken oder dergleichen infrage. Meist werden die Ladungssicherungsmittel mittels Haken oder Ösen am Zurrmittel der Ladungssicherungseinrichtung befestigt.

Für eine zufriedenstellende Ladungssicherung, insbesondere für eine Teilladungssicherung, ist es wünschenswert, wenn die Ladung entweder in regelmäßigen Abständen oder bedarfsmäßig auf die Größe der Ladung angepasst, am Nutzfahrzeug festgelegt werden kann. Auf diese Weise kann die Ladungssicherung an jede Ladungssituation angepasst werden. Bei der Ladungssicherung beispielsweise über die an den Zurrmitteln befestigten Zurrgurten oder über Ladebalken ist es zwingend notwendig zwischen der Ladung und den Ladungssicherungsmitteln einen Formschluss herzustellen, um eine Bewegung der Ladung in oder gegen die Fahrtrichtung bei Bewegung des Fahrzeuges zu vermeiden.

Die bekannten mit Längsgurten und Quergurten verstärkten Planen, wobei die Gurte mit der Plane verschweißt sind, weisen in üblicher Weise pro Quergurt einen Spannverschluss auf, wobei mit den Spannverschlüssen die Plane am Chassis des Trailers, insbesondere an dessen Außenrahmen verspannt wird. Am oberen Ende der Plane ist diese mit einer Rolleinrichtung verbunden. Um die Kräfte während der Fahrt des Fahrzeuges bei einer sich seitlich verschiebenden Ladung aufnehmen zu können, dienen Latten in einer oder mehreren Lattenreihen pro Fahrzeugseite, wobei die Latten in Rungentaschen zwischen jeweils zwei Rungen aufgenommen sind. Das Entfernen und das Einstecken der Latten für den Be- und Entladevorgang ist neben einem erhöhten Zeitaufwand auch ein Unfallschwerpunkt für den Fahrer, der das Entfernen und Einstecken der Latten über eine Leiter durchführen muss. Neben der Sturzgefahr von der Leiter kann es auch zu Verletzungen durch die gelösten Latten kommen. Wie bereits angesprochen, gibt es auch Planen, die neben den mit der Plane verschweißten Quer- und Längsgurten in Taschen aufgenommene Gurte aus hochzugfestem Material mit geringer Dehnung aufweisen. Diese hochfesten Gurte sind selber sind nicht mit der Plane verschweißt. Sind die hochfesten Gurte nur als Quergurte an der Plane ausgestaltet, werden zusätzliche Lattenreihen für die Befestigung von Ladungssicherungsmitteln notwendig, die bei einer Teilladung dafür Sorge tragen, dass die Ladung während der Fahrt nicht in oder entgegen der Fahrtrichtung des Fahrzeuges verrutschen kann. Bei dieser Lösung der Ladungssicherung ist es ebenfalls nachteilig, dass die Lattenreihe oder die Lattenreihen bei der Beladung und der Entladung des Fahrzeuges entfernt und wieder eingesteckt werden müssen. Bei dem in Längsrichtung in Taschen aufgenommenen Gurt, der mit Schlaufen als Zurrmittel zur Befestigung der Ladungssicherung ausgestaltet ist, ist nachteilig, dass dieser Gurt zusätzlich zu den Verstärkungsgurten in Taschen an der Plane aufgenommen werden muss. Die Ausbildung der Taschen zur Aufnahme des Gurtes sind aufwändig herzustellen und verursachen einen erhöhten Kostenaufwand.

### Offenbarung der Erfindung

Aufgabe der vorliegenden Erfindung ist es, die aus dem Stand der Technik bekannten Planen und Fahrzeuge mit diesen Planen zumindest teilweise zu verbessern. Insbesondere ist es die Aufgabe der vorliegenden Erfindung eine Plane und ein Fahrzeug mit dieser Plane so auszugestalten, dass eine Teilladungs- oder Ladungssicherung von Transportgut ohne die Verwendung von Latten möglich ist, um so die Beladezeiten und die Entladezeiten zu verkürzen. Zudem ist es die Aufgabe der vorliegenden Erfindung eine Plane so zu gestalten, dass diese trotz der erwünschten Funktion, nämlich diese ohne Latten verwenden zu können, kostengünstiger als die aus dem Stand der Technik bekannten Planen mit Teilladungssicherungsfunktion sind.

Die voranstehende Aufgabe wird durch eine Plane für ein Nutzfahrzeug mit den Merkmalen des Anspruchs 1 gelöst. Weitere Vorteile, Merkmale und Details der Erfindung ergeben sich aus den Unteransprüchen, der Beschreibung und den Zeichnungen.

Im Sinne der vorliegenden Erfindung soll als "Nutzfahrzeug" insbesondere ein Trailer, wie beispielsweise ein Standard-Curtainsider oder ein Mega-Curtainsider verstanden werden, wobei im Fall des erfindungsgemäßen Planenaufbaus Rungen als vertikale Verstrebungen zwischen dem Dach des Trailers und dem Ladeboden des Trailers dienen.

Vorteilhaft sind auf die zur Fahrzeuginnenseite gerichteten Flächen der Plane, insbesondere Seitenplanen, die bei Beladung des Fahrzeuges das Ladungsgut umschließen, Quer-, Längs- und/oder Diagonalgurte auf die Plane aufgeschweißt, welche zum einen zum Spannen der Plane und zur Verstärkung und zur Erhöhung der Festigkeit der Plane dienen, und zum anderen sind zumindest an einem mit der Plane verschweißten Längsgurt und/oder zumindest an einem Quergurt Zurrmittel ausgebildet. Die an den Gurten ausgebildeten Zurrmittel, die auch an den Diagonalgurten ausgebildet sein können, werden erfindungsgemäß für die Befestigung von Ladungssicherungsmitteln verwendet, wobei die Ladungssicherungsmittel zumindest formschlüssig mit der Ladung verbunden werden, um ein Verrutschen der Ladung, insbesondere in und gegen die Fahrtrichtung, zu sichern. Erfindungsgemäß erfüllen somit die mit der Plane verschweißten Gurte zwei Funktionen, nämlich zum einen dienen diese zur Verstärkung der Plane in besonders beanspruchten Bereichen der Plane, und zum anderen erfüllen die mit der Plane verschweißten Gurte die Funktion über an den Gurten ausgebildeten Zurrmittel Ladungssicherungsmittel aufzunehmen, die zur Ladungssicherung, insbesondere zur Teilladungssicherung, dienen. Durch die Aufnahme der Ladungssicherungsmittel an den an den Gurten ausgestalteten Zurrmitteln können vorteilhaft die Be- und Entladungszeiten verkürzt werden, da die Ladungssicherung nicht, wie im Stand der Technik üblich, mittels Latten erfolgen muss, die zum Be- und Entladen entfernt werden und wieder eingesetzt werden müssen, sondern die Zurrmittel zur Befestigung der Ladungssicherungsmittel, insbesondere Spanngurte, erfindungsgemäß integraler Bestandteil der Plane sind, nämlich diese an den mit der Plane verschweißten Gurten befestigt sind und noch bevorzugter diese aus den mit der Plane verschweißten Gurten gebildet sind. Vorteilhaft dienen die Längsgurte zur Aufnahme von Längskräften, insbesondere zur Teilladungssicherung. Die an den Quergurten ausgestalteten Zurrmittel können darüber hinaus allgemein zur Sicherung der Ladung dienen, um diese von oben auf dem Boden zu verspannen.

Die vorteilhaft für die vorliegende Erfindung zu verwendenden Gurte sollten gegenüber den aus dem Stand der Technik bekannten Gurten mit einer Zugfestigkeit von ca. 1,2 to eine erhöhte Zugfestigkeit, vorzugsweise mindestens eine doppelt so hohe Zugfestigkeit aufweisen. Der Einsatz von Gurten mit einer erhöhten Zugfestigkeit von ca. 2,4 to erlaubt vorteilhaft die erfindungsgemäße Teilladungssicherung über die aus den Gurten gebildeten oder die an den Gurten befestigten Zurrmittel, an denen zur formschlüssigen Sicherung der Ladung die Ladungssicherungsmittel, insbesondere Zurrgurte, befestigt bzw. eingehängt werden können. Vorteilhaft sind sowohl die Längsgurte als auch die Quergurte mit einer erhöhten Zugfestigkeit von 2,4 to aus einem Material wie beispielsweise Polyester oder einem Aradmid verstärkten Material ausgestaltet. In besonders vorteilhafter Weise kann die mit den hoch zugfesten Quergurten und Längsgurten verstärkte Plane, wobei vorzugsweise die hoch zugfesten Gurte aus einem Polyestermaterial oder einem Materialmix mit Polyester verwendet werden, insbesondere in Verbindung mit einem festen Dach, beispielsweise aus Platten in Sandwichkonstruktion oder als Metall- oder Blechdach ausgestaltet, ohne zusätzliche Sicherungsmittel eine Ladung im Rahmen der gesetzlichen Vorschriften auch bei einem seitlichen Verrutschen der Ladung sichern. Das Metall- oder Blechdach weist vorteilhaft eine Metalldeckschicht auf, die mit Spriegeln unterlegt und diese mit dem Dach verklebt sind, womit das Dach als Scheibe wirkt und insbesondere mit den Rungen eine stabile Konstruktion bildet, die den gesetzlichen Vorschriften entgegenkommt. Die gesetzlichen Vorschriften sehen vor, dass der Aufbau bei einem gefahrenen S-Schlag bis maximal 300 mm nach außen ausweicht, oder anders gesagt die Verstärkung der Plane durch die hoch zugfesten Quergurte insbesondere in Verbindung mit dem als Scheibe wirkenden Dach ein seitliches Ausweichen des Aufbaus bis maximal 300 mm verhindert. Die Gurte können vorteilhaft aus einem Polyestermaterial oder einem Polyestergewebe mit oder ohne eingewebte Verstärkungsfäden oder Drähte ausgestaltet sein. Auch eignen sich durch ein Aradmidgewebe verstärkte Gurte oder aus einem Aradmidgewebe hergestellte Gurte mit oder ohne eingewebte Verstärkungsfäden oder Drähte, wobei die für die Gurte verwendeten Materialien allgemein dazu geeignet sein sollen, um die Gurte mit der Plane verschweißen zu können.

Vorteilhaft sind die Zurrmittel in Form von Schlaufen ausgestaltet. Die Schlaufen werden bevorzugt aus einem Stück als integraler Bestandteil mit vorzugsweise dem Längsgurt, dem Quergurt und/oder dem Diagonalgurt gebildet, indem der Gurt an den Stellen an denen das Zurrmittel ausgebildet werden soll, in eine oder mehrere Schlaufen gelegt wird. In der weiteren Beschreibung der vorliegenden Erfindung wird der Einfachheit halber die vorteilhafte Ausgestaltung der Zurrmittel an den Längsgurten beschrieben. Die Schlaufen können zusätzlich mit dem Gurt vernäht sein. Noch bevorzugter werden die aus dem Gurt gebildeten Schlaufen an deren unteren, zum Gurt hin liegenden Enden vernäht oder durch beispielsweise eine Klemmhülse zusammengehalten. Nach dem Ausbilden der Schlaufen wird der Gurt auf die Plane geschweißt. Dabei ist vorteilhaft, dass die Schlaufen und insbesondere die Naht oder die Nähfäden nicht der Hitzeeinwirkung bei dem Schweißprozess des Gurtes mit der Plane unterliegen, wodurch die Festigkeit der Schlaufe durch eine eventuelle Materialschädigung beim Verschweißen, nicht beeinträchtigt wird.

Die Zurrmittel können vorteilhaft aus dem Material der Gurte gebildet werden und an den Gurten beispielsweise durch Vernähen oder durch eine andere Art der Befestigung an den Gurten befestigt werden. Vorzugsweise werden die Zurrmittel vor dem Verschweißen der Gurte an den Gurten befestigt. Es ist aber auch denkbar, dass die Zurrmittel nach dem Verschweißen der Gurte mit der Plane an den Gurten befestigt werden. Vorteilhaft können dadurch bereits hergestellte Planen durch die Befestigung von Zurrmitteln an den Gurten nachgerüstet werden, um eine Teilladung durch an den Zurrmitteln befestigten Ladungssicherungsmitteln zu sichern. Bei dieser Ausführungsform der an den Gurten befestigten Zurrmittel, können diese vorteilhaft auch aus einem anderen hoch zugfesten Material ausgestaltet sein, beispielsweise aus einem Aradmidgewebe mit oder ohne Verstärkung durch eingeflochtene Draht- oder Metallfäden.

Als Befestigungsmittel können beispielsweise Nieten, vorzugsweise Sattlernieten mit Flachköpfen, oder Schraubverbindungen dienen. Vorteilhaft sind die Befestigungselemente so ausgestaltet, dass sich diese nach dem Verschweißen der Gurte mit der Plane nicht prominent an der Außenseite der Plane abbilden, um beispielsweise eine Beschriftung oder Bebilderung der Plane nicht zu stören. Werden die Zurrmittel nach dem Verschweißen der Gurte mit der Plane an den Gurten angebracht, können vorzugsweise Sattlernieten mit einem Flachkopf verwendet werden, wobei die Nieten sowohl die Plane als auch die Gurte durchgreifen und der Flachkopf der Niete an der Außenseite der Plane aufliegt. Dadurch, dass die Niete mit Flachkopf an der Außenseite der Plane aufliegt, kann eine Beschriftung oder Bebilderung der Plane über den Flachkopf hinaus erfolgen, ohne dass die Erscheinungsform der Beschriftung oder Bebilderung der Plane durch die Befestigungselemente für die Zurrmittel beeinträchtigt ist.

Die an den Gurten befestigten Zurrmittel können auch als Ösen, Ringe oder Bügel ausgestaltet sein, an denen die Ladungssicherungsmittel zum formschlüssigen Abspannen und zur Sicherung einer Ladung befestigt werden können. Die Befestigung der Ösen, Ringe oder Bügel kann durch Einbindung in die Gurte in den Bereichen, in denen die Zurrmittel ausgestaltet werden sollen, erfolgen, indem die Ösen, Ringe oder Bügel vor dem Verschweißen des Gurtes mit der Plane unter den Gurt gelegt werden oder in einer aus dem Gurt gebildeten Schlaufe aufgenommen werden. Natürlich ist auch ein Vernähen der Ösen, Ringe oder Bügel mit dem Gurt denkbar, wobei das Nahtmaterial mehrfach um die Ösen, Ringe oder Bügel geschlauft und dann mit dem Gurt zur Nahtbildung verwendet wird. Besonders vorteilhaft sind die Ösen, Ringe oder Bügel mittels Befestigungselementen, wie die angesprochenen Nieten oder Schraubverbindungen an dem Gurt befestigt. Wie auch für die als Schlaufen ausgebildeten Zurrmittel beschrieben, können die Ösen, Ringe oder Bügel vor dem Verschweißen des Gurtes mit der Plane an dem Gurt befestigt werden oder bei bereits hergestellten Planen als Zurrmittel nachgerüstet werden.

Erfindungsgemäß sind auf der einen ersten Seite des Fahrzeuges Zurrmittel in einem Abstand von 0,6 m bis 2,4 m zueinander und besonders bevorzugt in einem Abstand von 1 m bis 2 m in Längsrichtung an zumindest einem ersten Längsgurt auf der einen ersten Seite der Plane, die zum Innenraum des Aufbaus zeigt, angeordnet. Um eine Abspannung von Ladungssicherungsmitteln von der einen ersten Seite des Fahrzeuges zu der anderen zweiten Seite des Fahrzeuges zu erlauben, sind auch auf der anderen zweiten Seite des Fahrzeuges auf der zum Innenraum des Planenaufbaus zeigenden zweiten Seite der Plane Zurrmittel in dem gleichen Abstand oder einem anderen Abstand zu der Anordnung der Zurrmittel auf der ersten Seite der Plane angeordnet. Die zweite Seite des Planenaufbaus kann auch durch eine feste Wand gebildet sein, wobei dann Zurrmittel, wie in dieser Anmeldung beschrieben, zur Befestigung der Ladungssicherungsmittel an der Wand befestigt sind. Durch die Beabstandung der Zurrmittel zueinander in Längsrichtung des Fahrzeuges ist eine variable Ladungssicherung, insbesondere bei unterschiedlichen Teilbeladungen des Fahrzeuges sichergestellt, sowohl durch orthogonal zur Fahrzeuglängsachse von einer Seite zu der anderen Seite des Planenaufbaus gespannte Ladungssicherungsmittel als auch durch diagonal zwischen den Zurrmitteln von der einen Fahrzeugseite zu der anderen Fahrzeugseite gespannten Ladungssicherungsmitteln. Besonders bevorzugt sind die Zurrmittel parallel zur Fahrzeuglängsachse, das heißt in Längsrichtung des mit der Plane verschweißten Längsgurtes in einem Abstand zueinander angeordnet, der der Länge oder der Breite einer Europalette entspricht.

Um eine Teilladung mehrfach oder auch in verschiedenen Höhen absichern zu können, sind vorzugsweise über die Höhe der Seitenplane mindestens zwei Längsgurte mit den Längsseiten der Plane, die zum Innenraum des Aufbaus zeigen, übereinander liegend und mit Abstand zueinander mit der Plane verschweißt. Noch bevorzugter liegen auf jeder der Innenseiten der Längsseiten der Plane drei Längsgurte übereinander, die mit der Plane verschweißt sind und an denen die erfindungsgemäßen Zurrmittel ausgestaltet sind.

Ein weiterer Erfindungsaspekt der vorliegenden Erfindung ist ein Nutzfahrzeug mit der erfindungsgemäßen Plane in Form eines Aufbaus, insbesondere eines Planenaufbaus, insbesondere ein Trailer eines Sattelzuges, mit zumindest einer Seitenplane, die sich in Längsrichtung des Nutzfahrzeuges erstreckt. Die Seitenplane für das erfindungsgemäße Nutzfahrzeug weist vorteilhaft die Merkmale der erfindungsgemäßen Plane auf. Neben einem Trailer soll im Sinne der vorliegenden Erfindung als Nutzfahrzeug auch ein Lastkraftwagen mit einem Aufbau, der die erfindungsgemäße Plane umfasst, verstanden werden.

Als "Aufbau" oder "Planenaufbau" soll im Sinne der vorliegenden Erfindung ein Aufbau für ein Nutzfahrzeug verstanden werden, der zumindest eine Seitenplane umfasst. Das Dach des Planenaufbaus kann aus einer Plane oder vorteilhaft als festes Dach ausgestaltet sein. Auch die Stirnwand und die Rückwand des Planenaufbaus können aus einer Plane oder bevorzugter aus festen Wandelementen ausgestaltet sein.

In bevorzugter Weise eignet sich das erfindungsgemäße Nutzfahrzeug durch Ladungssicherungsvorrichtungen, die eine Sicherung von Getränkekisten oder anderem Ladungsgut in einer Vollbeladung oder als Teilladung auf dem Nutzfahrzeug erlauben. Die Ladungssicherungsvorrichtungen umfassen Ladungssicherungsmittel und Zurrmittel, wobei die Ladungssicherungsmittel erfindungsgemäß an den mit der Plane verschweißten Gurten angeordneten Zurrmitteln befestigt werden können.

Schließlich ist ein weiterer Erfindungsaspekt der vorliegenden Erfindung ein mit Zurrmitteln ausgestalteter hoch zugfester Gurt, der zum nachträglichen Aufschweißen auf eine Plane geeignet. Vorteilhaft ist der Gurt aus einem Polyestermaterial oder einem Polyestergewebe mit oder ohne eingewebte Verstärkungsfäden oder Drähte ausgestaltet. Auch eignet sich ein durch ein Aradmidgewebe verstärkter Gurt oder aus einem Aradmidgewebe hergestellter Gurt mit oder ohne Verstärkungsfäden.

Um hier Wiederholungen bezüglich der Vorteile des erfindungsgemäßen Aufbaus bzw. des erfindungsgemäßen mit Zurrmitteln ausgestalteten Gurtes zu vermeiden, wird auf die Beschreibung der vorteilhaften Ausgestaltungen der erfindungsgemäßen Plane verwiesen und es wird vollumfänglich auf die Offenbarung durch diese Beschreibung zurückgegriffen und umgekehrt.

### Bevorzugte Ausführungsbeispiele:

Weitere, die Erfindung verbessernde Maßnahmen werden nachstehend mit der Beschreibung von bevorzugten Ausführungsbeispielen der Erfindung anhand der Figuren näher dargestellt. Dabei können die in den Ansprüchen und in der Beschreibung erwähnten Merkmale jeweils einzeln für sich oder in beliebiger Kombination erfindungswesentlich sein. Dabei ist zu beachten, dass die in den Figuren dargestellten Ausführungsbeispiele nur beschreibenden Charakter haben und diese nicht dazu gedacht sind, die Erfindung in irgendeiner Form einzuschränken.

Es zeigen:
- Fig. 1: eine erfindungsgemäße Plane mit einem auf die Plane aufgeschweißten Längsgurt, an dem in einem Abstand zueinander Zurrmittel in Form von mit dem Gurt befestigten Schlaufen ausgebildet sind, in einer schematischen Schnittansicht der Plane entlang der in den Figuren 4 bis 7 dargestellten Schnittachsen X-X,
- Fig. 2: eine erfindungsgemäße Plane mit einem auf die Plane aufgeschweißten Längsgurt an dem in einem Abstand zueinander Zurrmittel in Form von aus dem Gurt gebildeten Schlaufen ausgestaltet sind, in einer schematischen Schnittansicht der Plane entlang der in den Figuren 4 bis 7 dargestellten Schnittachsen X-X,
- Fig.3: eine erfindungsgemäße Plane mit einem auf die Plane aufgeschweißten Längsgurt an dem in einem Abstand zueinander Zurrmittel in Form von aus dem Gurt gebildeten Schlaufen ausgestaltet sind, in einer schematischen Schnittansicht der Plane entlang der in den Figuren 4 bis 7 dargestellten Schnittachsen X-X,
- Fig.4: einen Abschnitt eines Längsgurtes mit einem aus dem Gurt in Form einer Schlaufe gebildeten Zurrmittel in einer schematischen Seitenansicht,
- Fig.5: den Längsgurt aus Figur 4 verschweißt mit einer Plane mit einer den Stiel des Zurrmittels zusammenhaltenden Klemmhülse in einer schematischen Seitenansicht,
- Fig.6: den Längsgurt aus Figur 4 verschweißt mit einer Plane mit einer den Stiel des Zurrmittels zusammenhaltenden Naht in einer schematischen Seitenansicht,
- Fig.7: die Plane aus Figur 1 in einer Draufsicht auf die Innenseite der Plane mit dem über Nieten an dem Gurt befestigten Zurrmittel,
- Fig. 8: die Plane aus Figur 1 in einer Draufsicht auf die Innenseite der Plane mit dem an dem Gurt vernähten Zurrmittel,
- Fig.9: eine erfindungsgemäße Plane mit Quer- und Längsgurten mit einem gemeinsam an dem Quergurt und dem Längsgurt befestigten Zurrmittel in Form einer Öse in einer Draufsicht auf die Innenseite der Plane,
- Fig.10: eine erfindungsgemäße Plane mit Quer- und Längsgurten mit einem gemeinsam an dem Quergurt und dem Längsgurt befestigten Zurrmittel in Form eines Ringes in einer Draufsicht auf die Innenseite der Plane,
- Fig.11: ein Nutzfahrzeug, vorliegend ein Trailer für einen Sattelzug, in seitlicher Ansicht mit einem erfindungsgemäßen Planenaufbau,
und
- Fig.12: das Nutzfahrzeug aus Figur 11 mit Teilbeladung in einer Draufsicht von oben.

In den unterschiedlichen Figuren sind gleiche Teile stets mit denselben Bezugszeichen versehen, weshalb diese in der Regel nur einmal beschrieben werden.

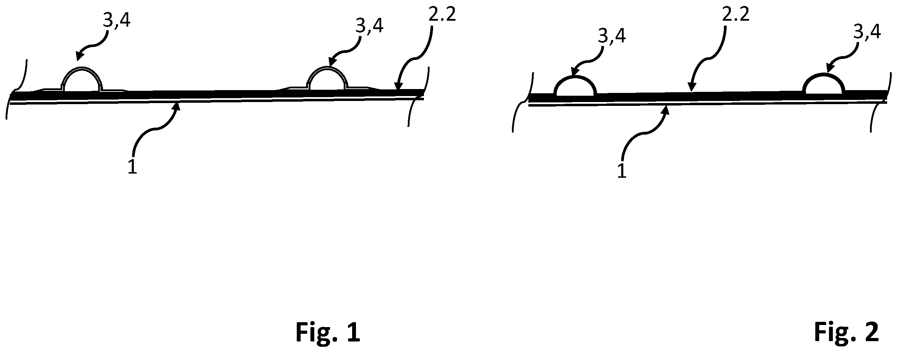

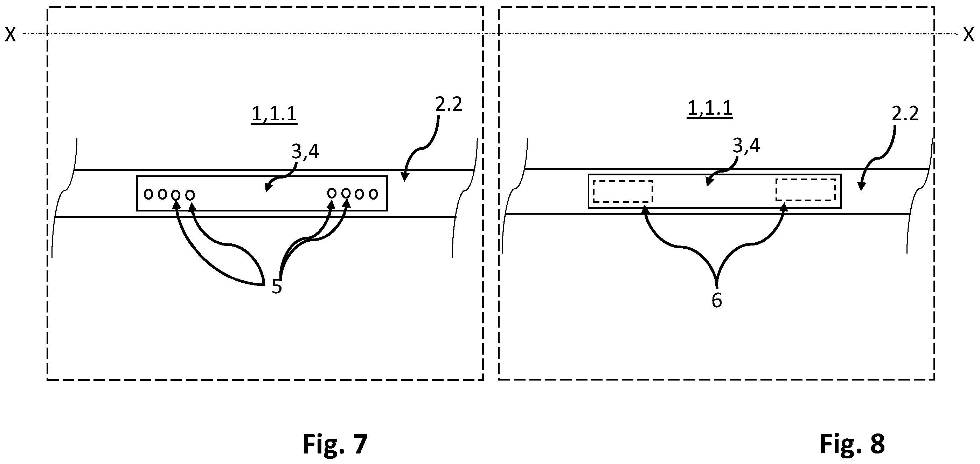

Fig. 1 zeigt eine erfindungsgemäße Plane 1 in einer schematischen Schnittansicht der Plane entlang der in den Figuren 7 bis 10 dargestellten Schnittachsen X-X mit einem auf die Plane 1 aufgeschweißten Längsgurt 2.2. An dem Längsgurt 2 sind in einem Abstand zueinander Zurrmittel 3 in Form von an dem Gurt 2.2 befestigten Schlaufen 4 ausgebildet. Wie in den Figuren 7 und 8, in einer Draufsicht auf die Innenfläche der Plane 1 zu erkennen ist, können die in Form von Schlaufen 4 ausgestalteten Zurrmittel 3 mittels Nieten 5 oder anderen Befestigungsmitteln an dem Gurt 2.2 befestigt werden (s. Figur 7). Werden die Zurrmittel 3 vor dem Verschweißen des Gurtes 2.2 mit der Plane 1 an dem Gurt 2.2 befestigt, durchgreifen die Befestigungsmittel nur den Gurt 2.2 und nicht die Plane 1. Die in Form von Schlaufen 4 ausgestalteten Zurrmittel 3 können aber auch, wie es die Figur 8 zeigt, mit dem Gurt 2.2 mittels zumindest einer Naht 6 vernäht sein. Werden in einer erfindungsgemäßen Variante die Zurrmittel 3 nach dem Verschweißen des Gurtes 2.2 mit der Plane 1 an dem Gurt 2.2 befestigt, durchgreifen die Befestigungsmittel, beispielsweise die Nieten 5 oder die Naht 6 auch den Planenstoff und sind an der Außenseite der Plane 1 als solche Befestigungen zu erkennen. Bei der Ausführungsform in Figur 1 liegt zwischen den Zurrmitteln 3 in Form der Schlaufen 4 und der Innenfläche der Plane 1 der mit der Plane 1 verschweißte Gurt 2.2, mit dem Vorteil, dass beim Einhängen von Ladungssicherungsmitteln in die Zurrmittel 3, die Plane 1 nicht beschädigt werden kann. Zudem ist bei dieser Ausführungsform der Plane 1 mit den an dem Gurt 2.2 befestigten Zurrmitteln 3 vorteilhaft, dass die Zurrmittel 3 entweder aus dem gleichen Material wie der Gurt 2.2 oder aber auch aus einem anderen hoch zugfesten Material bestehen können, wie beispielsweise einem Aradmidgewebe mit oder ohne eingewebte Verstärkungsfäden oder Drähte.

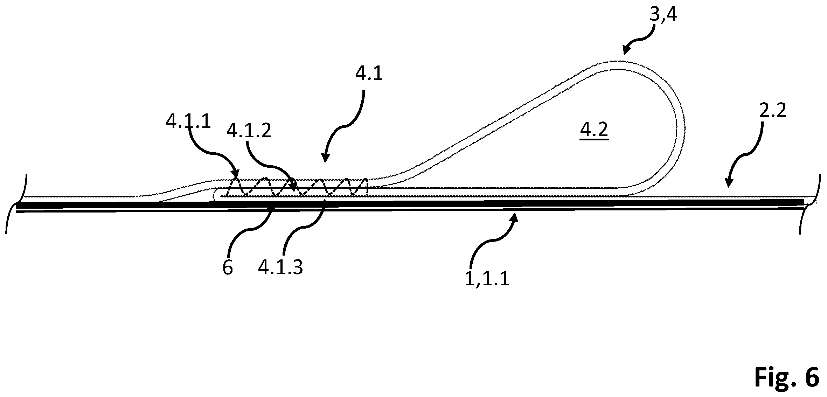

Figur 2 zeigt eine erfindungsgemäße Plane 1 in einer schematischen Schnittansicht der Plane 1 entlang der in den Figuren 6 bis 8 dargestellten Schnittachsen X-X mit einem auf die Plane 1 aufgeschweißten Längsgurt 2.2. Im Gegensatz zu den in Figur 1 an dem Gurt 2.2 befestigten Zurrmittel 3, sind die in Figur 2 gezeigten Zurrmittel 3 in Form von Schlaufen 4 aus dem Gurt 2.2 gebildet. In den Bereichen, in denen die Zurrmittel 3 in Form von Schlaufen 4 aus dem Gurt 2.2 gebildet sind, ist der Gurt 2.2 nicht mit dem Planenstoff der Plane 1 verschweißt, was den Vorteil hat, dass die Zurrmittel 3 beim Verschweißen des Gurtes 2.2 mit der Plane 1 keiner Hitzeeinwirkung unterliegen, die zu einem Schmelzen und damit zu einem Verlust der Zugfestigkeit des Materials des Gurtes 2.2, aus dem die Schlaufen 4 gebildet sind, führen könnte.

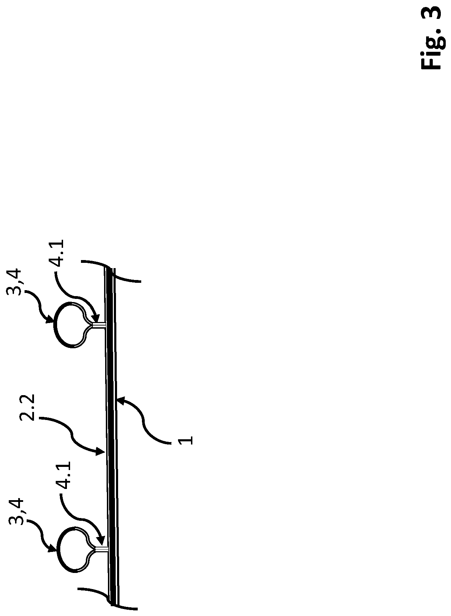

Figur 3 zeigt eine Ausführungsform einer erfindungsgemäßen Plane 1 in einer schematischen Schnittansicht einer Seitenplane 1.1 entlang der in den Figu-ren 4 bis 7 dargestellten Schnittachsen X-X mit einem auf die Seitenplane 1.1 aufgeschweißten Längsgurt 2.2. Wie auch bei dem in Figur 2 gezeigten Gurt 2.2, sind, wie in der Figur 3 zu erkennen ist, die Zurrmittel 3 in Form von Schlaufen 4 aus dem Gurt 2.2 als integrale Bestandteile des Gurtes 2.2 aus dem Gurt 2.2 gebildet. Im Gegensatz zu dem in Figur 2 gezeigten Gurt 2.2, sind in der Darstellung in Figur 3 die Schlaufen 4 derart ausgestaltet, dass die unteren Enden der Schlaufen 4, einen Stiel 4.1 bildend, beispielsweise zusammengenäht, verschweißt, verklebt oder über eine Klemmvorrichtung, wie beispielsweise einem Klemmring, oder mittels Befestigungselementen, wie beispielsweise Nieten zusammengehalten werden, oder einer Kombination aus zumindest zwei der genannten Verbindungsmöglichkeiten, mit dem Vorteil, dass die Schlaufe 4 zum Einhängen der Ladungssicherungsmittel an dem Stiel 4.1 endet und es somit zu keinem die Plane 1 beschädigenden Kontakt mit den Ladungssicherungsmitteln kommt. In der Figur von rechts nach links verlaufend, wird der Gurt 2.2 in dem Bereich, der den Stiel 4.1 bildet, in die Richtung aus der der Gurt 2.2 kommt, zurückgeführt, um die Schlaufe 4 auszubilden, wodurch der Stiel aus zwei nebeneinanderliegenden Lagen des Gurtes 2.2 gebildet wird. Nach dem Stiel 4.1 läuft der Gurt 2.2 nach links in der Figur weiter und eine weitere Schlaufe 4, die vorteilhaft in einem Abstand von 0,6 m bis 2,4 m zu der ersten rechten Schlaufe 4 liegt, ist als integraler Bestandteil, d.h. monolithisch aus dem Gurt 2.2 ausgebildet. Wie auch bei dem in Figur 2 dargestellten Ausführungsbeispiel kommt es auch bei den in Figur 3 dargestellten Zurrmitteln 3 in Form von Schlaufen 4, die in einem Stiel 4.1 in den Gurt 2.2 führen, beim Verschweißen des Gurtes 2.2 mit der Plane 1 zu keiner Hitzeeinwirkung auf die Schlaufen 4, welche zu einem Schmelzen und damit zu einem Verlust der Zugfestigkeit des Materials des Gurtes 2.2, aus dem die Schlaufen 4 gebildet sind, führen könnte. Insbesondere wird bei einem Vernähen der Lagen des Gurtes 2.2, die den Stiel 4.1 bilden, beim Verschweißen des Gurtes 2.2 mit der Plane zu keiner Schädigung der Naht 6, wodurch die Integrität des Stieles 4.1 der Schlaufe 4 aufrechterhalten bleibt.

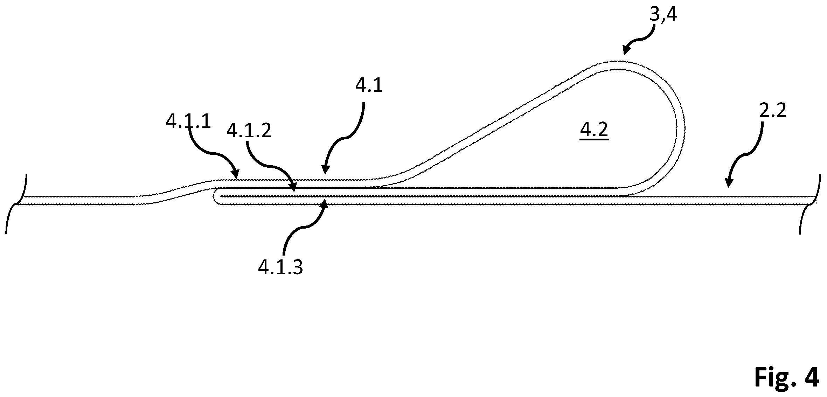

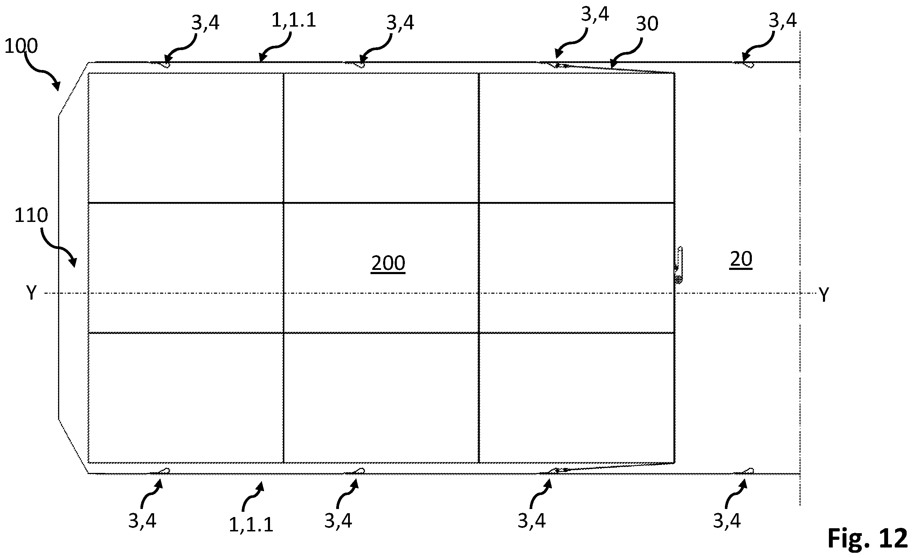

Fig.4 zeigt einen Abschnitt eines erfindungsgemäßen Längsgurtes 2.2 mit einem aus dem Gurt 2.2. in Form einer Schlaufe 4 gebildeten Zurrmittel 3 in einer schematischen Seitenansicht. Der mit dem Zurrmittel 3 ausgestaltete Längsgurt 2.2 eignet sich beispielsweis zum nachträglichen Aufschweißen auf eine Plane 1. Im Verlauf des Längsgurtes 2.2 parallel zur Längsachse Y-Y des Fahrzeuges 100, wie in Figur 12 dargestellt, sind aus einem Längsgurt 2.2 in einem Abstand, der vorteilhaft zwischen 0,6 m und 2,4 m zwischen zwei Zurrmitteln 3 beträgt, mehrere Zurrmittel 3 in Form von Schlaufen 4 gebildet, die zur Befestigung von Ladungssicherungsmitteln 30 dienen. Vorteilhaft ist der Gurt 2.2 aus einem Gewebe ausgestaltet, das eine Verschweißung des Gurtes 2.2 mit der Plane 1 erlaubt, beispielsweise Polyestermaterial oder ein Polyestergewebe mit oder ohne eingewebte Verstärkungsfäden oder Drähte. Auch eignet sich ein durch ein Aradmidgewebe verstärkter Gurt oder aus einem Aradmidgewebe hergestellter Gurt mit oder ohne Verstärkungsfäden, der unter Ausgestaltung von Zurrmitteln 3 mit der Plane 1 verschweißt werden kann. In der Figur von rechts nach links verlaufend, wird der Gurt 2.2 in einem Bereich, der als Stiel 4.1 bezeichnet wird, in die Richtung, aus der der Gurt 2.2 kommt, zurückgeführt, um eine Schlaufe 4 auszubilden. Am unteren Ende der Schlaufe 4.2 welches in der Richtung liegt, aus der der Gurt kommt und wieder in den Stiel 4.1 übergeht, liegt der Gurt 2.2 in zwei oberen Lagen 4.1.1 und 4.1.2, die miteinander beispielsweise durch Vernähen, Verkleben, Verklemmen oder Verschweißen verbunden werden, oder mittels Befestigungselementen, wie beispielsweise Nieten, oder einer Kombination aus zumindest zwei der genannten Verbindungsmöglichkeiten zusammengehalten werden, auf der unteren mit der Plane 1 zu verschweißenden Lage 4.1.3 auf, wodurch der aus den oberen zwei Lagen 4.1.1 und 4.1.2 gebildete Stiel 4.1 eine zweifach so hohe Zugfestigkeit erhält, als der in einer Lage liegende Gurt 2.2. Nach dem Stiel 4.1 läuft der Gurt 2.2 weiter in der Figur nach links und kann dann mit weiteren Zurrmitteln 3 ausgestaltet werden, bzw. die Zurrmittel 3 in Form von Schlaufen 4 aus dem Gurt gebildet werden. Anstelle des dargestellten Längsgurtes 2.2 kann das dargestellte Zurrmittel 3 in Form der Schlaufe 4 auch aus einem Quergurt 2.1 oder einem Diagonalgurt ausgestaltet werden.

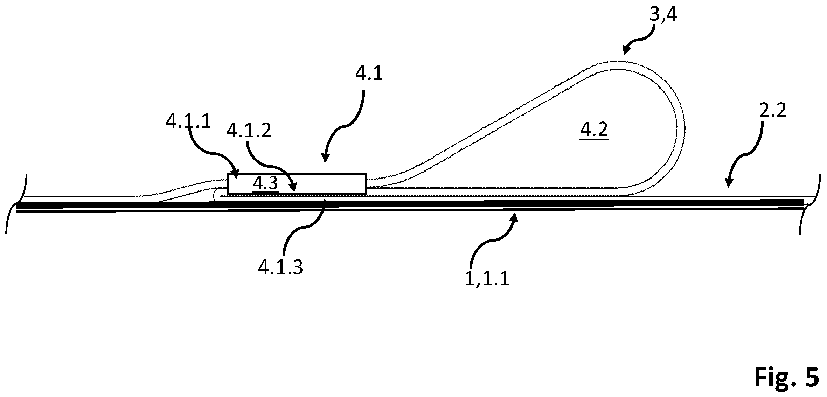

Fig.5 zeigt den Abschnitt des Längsgurtes 2.2 aus Figur 4, der mit einem Abschnitt einer Seitenplane 1.1 verschweißt ist. Die untere Lage 4.1.3 des Stieles 4.1 ist mit der Plane 1 verschweißt, jedoch nicht die oberen zwei Lagen 4.1.1 und 4.1.2 des Stieles 4.1. Wie in der Figur dargestellt, ist der Stiel 4.1, der aus den oberen zwei Lagen 4.1.1 und 4.1.2 des als Schlaufe 4 ausgestalteten Zurrmittels 3 gebildet wird, von einer Klemmhülse 4.3 umfasst, die die zwei, den Stiel 4.1 der Schlaufe 4 bildenden Lagen 4.1.1 und 4.1.2 zusammenhält. Die Klemmhülse 4.3 hat zudem den Vorteil, dass diese beim Verschweißen des Längsgurtes 2.2 mit der Plane 1 als Hitzeschild dient und so beispielsweise bei ungewollter Hitzeeinwirkung auf den Stielbereich die Materialintegrität des Gurtes 2.2 im Stielbereich aufrechterhalten bleibt. Anstelle des dargestellten Längsgurtes 2.2 kann das dargestellte Zurrmittel 3 in Form der Schlaufe 4 auch aus einem Quergurt 2.1 oder einem Diagonalgurt ausgestaltet werden. Es können auch die drei dargestellten Lagen 4.1.1, 4.1.2 und 4.1.3 gemeinsam den Stiel 4.1 bilden und mit der Klemmhülse 4.3 umgriffen werden.

Fig.6 zeigt den Abschnitt des Längsgurtes 2.2 aus Figur 4, der mit einem Abschnitt einer Seitenplane 1.1 verschweißt ist. Durch die oberen zwei Lagen 4.1.1 und 4.1.2, die den Stiel 4.1 der Schlaufe 4 bilden, ist zumindest eine Naht 6 geführt, durch die die oberen zwei Lagen 4.1.1 und 4.1.2 des Stiels 4.1 zusammengehalten werden. Die untere Lage 4.1.3 des Stieles 4.1 ist mit der Plane 1 verschweißt, jedoch nicht die oberen zwei Lagen 4.1.1 und 4.1.2 des Stieles 4.1, um die durch die oberen zwei Lagen 4.1.1 und 4.1.2 geführte Naht 6 beim Verschweißen des Gurtes 2.2 mit der Plane 6 nicht zu beschädigen und dadurch eventuell zu schwächen. Entgegen der Darstellung kann die Naht 6 zusätzlich auch durch die Plane 1 geführt werden. Vorteilhaft jedoch ist die Ausbildung der Zurrmittel 3 aus dem Gurt 2.2 bevor dieser mit der Plane 1 verschweißt wird. Anstelle des dargestellten Längsgurtes 2.2 kann das dargestellte Zurrmittel 3 in Form der Schlaufe 4 auch aus einem Quergurt 2.1 oder einem Diagonalgurt ausgestaltet werden. Um den Stiel 4.1 besonders fest auszugestalten und vor ungewollter Hitzeeinwirkung beim Verschweißen des Gurtes 2.2 mit der Plane 1 zu schützen, können die zwei Lagen 4.1.1 und 4.1.2 des Stiels 4.1 mit einer Naht 6 und zusätzlich mit einer Klemmhülse 4.3 zusammengehalten werden. Es können auch die drei dargestellten Lagen 4.1.1, 4.1.2 und 4.1.3 den Stiel 4.1 des Zurrmittels 3 bilden und von der Naht zusammengehalten und/oder mit einer Klemmhülse 4.3 zusammen gehalten werden.

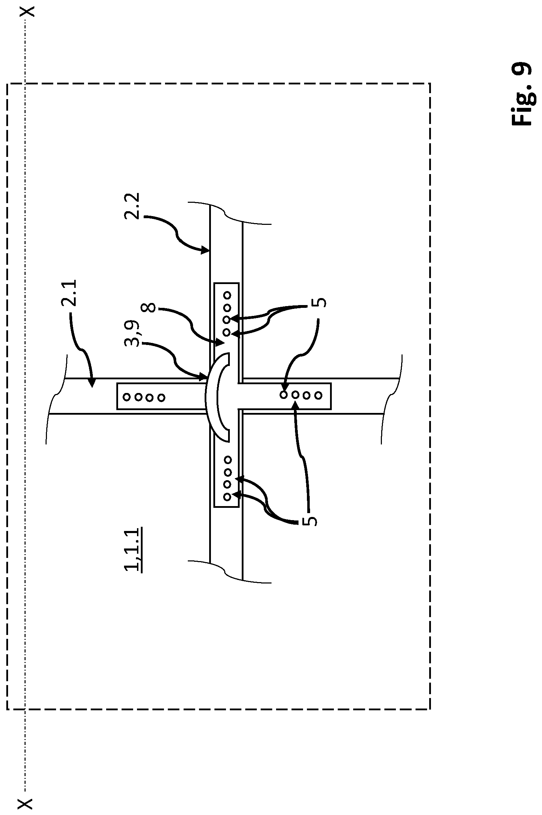

Figur 9 zeigt eine erfindungsgemäße Plane 1 in einer Draufsicht auf die Innenseite der Plane 1. Die Plane ist mit Quergurten 2.1 und Längsgurten 2.2 verstärkt. An dem dargestellten Quergurt 2.1 und dem Längsgurt 2.2 ist gemeinsam eine Aufnahme 8 für ein Zurrmittel 3 über Nieten 5 an den Gurten 2.1 und 2.2 befestigt. Vorliegend ist das Zurrmittel 3 in Form eines Bügels 9 ausgestaltet, der zumindest kraft- und/oder stoffschlüssig mit der Aufnahme 8 verbunden ist. Vorteilhaft bei der dargestellten Befestigung der Aufnahme 8 an einem Knotenpunkt, an dem ein Quergurt 2.1 einen Längsgurt 2.2 kreuzt, erfolgt die Übertragung der über die in die Zurrmittel 3 eingehängten Ladungssicherungsmittel einwirkende Kraft ausgehend von der Ladung gemeinsam auf den Quergurt 2.1 und den Längsgurt 2.2 mit dem Vorteil, dass die Gurte 2.1 und 2.2 eine normale Zugfestigkeit aufweisen können, die sich durch die Befestigung der Aufnahme 8 an beiden Gurten 2.1 und 2.2 verdoppelt. Natürlich können auch Gurte 2.1 und 2.2 mit doppelter Zugfestigkeit oder ein Gurt 2.1 oder 2.2 mit einfacher Zugfestigkeit und der andere Gurt 2.2 oder 2.1 eine einfache, normale Zugfestigkeit aufweisen. Eine einfache Zugfestigkeit eines Gurtes 2.1 oder 2.2 liegt bei ca. 1,2 to, entsprechend liegt die doppelte, erhöhte Zugfestigkeit der Gurte 2.1 oder 2.2 bei ca. 2,4 to. Entgegen der Darstellung kann die Aufnahme 8 selber als Zurrmittel 3 ausgestaltet sein, nämlich zumindest bereichsweise sich von den Gurten 2.1 und 2.2 derart abheben, dass durch die Aufnahme 8 ein Bügel gebildet ist, an den ein Ladungssicherungsmittel befestigt werden kann.

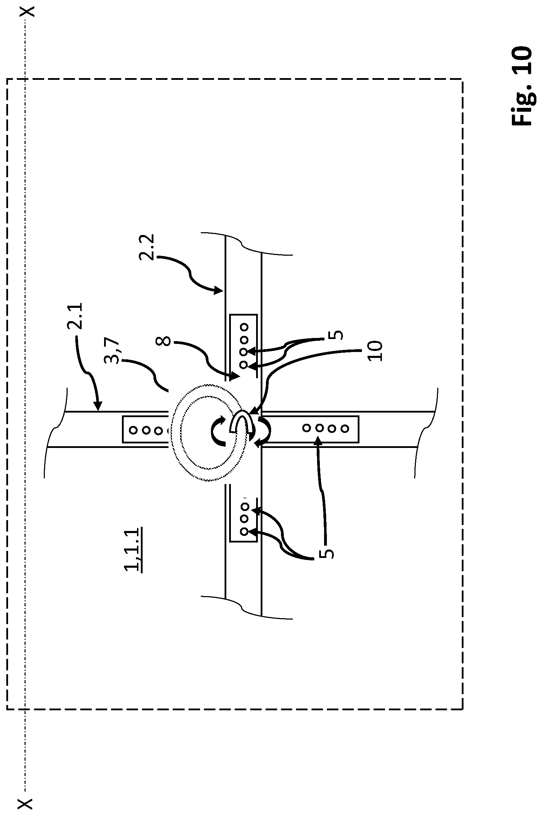

Figur 10 zeigt eine erfindungsgemäße Plane 1 in einer Draufsicht auf die Innenseite der Plane 1. Die Plane 1 ist wie im Ausführungsbeispiel in Figur 6 mit Quergurten 2.1 und Längsgurten 2.2 verstärkt. An dem dargestellten Quergurt 2.1 und dem Längsgurt 2.2 ist gemeinsam eine Aufnahme 8 für ein Zurrmittel 3 über Nieten 5 an den Gurten 2.1 und 2.2 befestigt. Vorliegend ist das Zurrmittel 3 in Form eines Rings 7 ausgestaltet, der beweglich über eine Befestigung 10 mit der Aufnahme 8 beweglich verbunden ist, mit dem Vorteil, dass bei Nichtnutzung des Rings 7, dieser sich selbsttätig in einer Ruhestellung parallel zur Innenfläche der Plane 1 ausrichtet oder legt. Wird an dem Ring 7 ein Ladungssicherungsmittel befestigt, richtet sich der Ring 7 in Richtung der durch das Ladungssicherungsmittel beaufschlagten Krafteinwirkung aus, nämlich bei Zugkrafteinwirkung durch das Ladungssicherungsmittel in Richtung der Zugkraft. In besonders vorteilhafter Weise ist wie dargestellt die Befestigung 10 drehbeweglich an der Aufnahme 8 befestigt, womit das als Ring 7 ausgestaltete Zurrmittel 3 zumindest teilweise und bevorzugt um 360° derart drehbar ist, dass eine Ausrichtung des Rings 7 auf die Zugkrafteinwirkung ohne Einschränkung erfolgen kann.

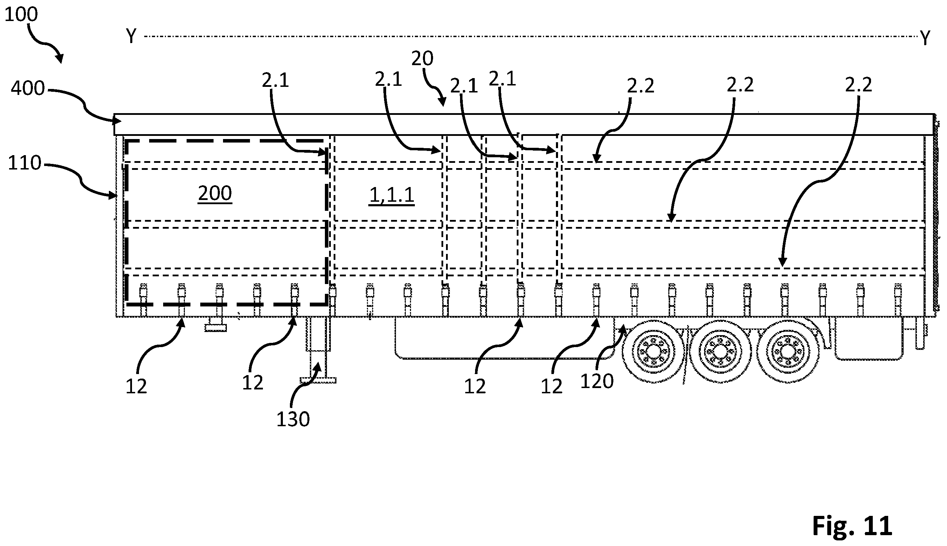

Figur 11 ein Nutzfahrzeug 100 mit Planenaufbau 20, hier dargestellt einen Trailer für einen Sattelzug in seitlicher Ansicht mit einer erfindungsgemäßen Plane 1. Der konventionell aufgebaute Trailer 100 des sogenannten "Curtainsider"-Typs umfasst ein aus Stahlprofilen gebildetes quaderförmiges Gerüst, das zumindest abschnittsweise von der Plane umspannt ist. Der Planenaufbau 20 ist auf einem Fahrwerkschassis 120 montiert, wobei der Aufbau 20 einen mit zu transportierendem Ladungsgut befüllbaren Innenraum umgibt. Die beiden Fahrzeugseiten des Aufbaus 20 sind jeweils durch eine erfindungsgemäße Plane 1 in Form einer Seitenplane 1.1 verschlossen. Aufgrund der hier gewählten Ansicht ist von den Seitenplanen 1.1 nur die in Draufsicht auf die eine Fahrzeugseite des Trailers sichtbar.

Die Seitenplanen 1.1 werden jeweils mit ihrem oberen Längsrand mittels hier nicht dargestellten Führungselementen in einem als Führungsschiene ausgebildeten Längsträger des Aufbaus 20 geführt (hier nicht dargestellt), um in Längsrichtung Y-Y des Trailers auf und zugezogen werden zu können. Das Dach 400 des dargestellten Aufbaus 20 ist aus einer Plane gebildet. Entgegen der Darstellung kann das Dach 400 vorteilhaft als festes Dach aus Metall, Blech oder aus Einzelpaneelen in Sandwichbauweise, welche zusammengefügt ein festes Dach bilden, ausgestaltet sein. Das Metall- oder Blechdach ist dabei vorteilhaft mit Spriegeln unterlegt und diese sind mit dem Dach verklebt, womit das Dach als Scheibe wirkt und insbesondere mit den Rungen (nicht dargestellt) eine stabile Konstruktion bildet. In der in der Figur dargestellten zugezogenen Stellung sind die Seitenplanen 1.1 zusätzlich mittels in regelmäßigen Abständen über die Länge des Aufbaus A verteilten, an den Seitenplanen 1.1 befestigten Spanngliedern 12 gegen das Fahrwerkschassis 120, insbesondere gegen den Außenrahmen des Chassis 120 verspannt. Auf den Innenseiten der Seitenplanen 1.1 sind in einem Abstand zueinander und übereinander liegend Längsgurte 2.2 mit den Seitenplanen 1.1 verschweißt. Die Längsgurte 2.2 sind aufgrund deren Lage an den Innenseiten der Seitenplanen 1.1 durch unterbrochene Linien dargestellt. Die mit den Seitenplanen 1.1 verschweißten Längsgurte 2.2 weisen vorteilhaft die Funktionen und die Ausgestaltungen auf, die in der Beschreibung der erfindungsgemäßem Plane 1 beschrieben sind und die in den vorherigen Figuren 1 bis 10 dargestellt sind. Zusätzlich zu den Längsgurten 2.2 sind mit der Seitenplane Quergurte 2.1 verschweißt, wobei in der Figur der Übersicht halber nicht alle Quergurte 2.1 eingezeichnet sind. Ist, wie dargestellt, der Trailer nur mit einer Teilladung 200 beladen, die vorliegend von der Stirnwand 110 bis zu der Stützvorrichtung 130 des dargestellten Nutzfahrzeuges verladen ist, können auch vorteilhaft die Knotenpunkte zwischen den Längsgurten 2.2 und dem in der Figur dargestellten linken Quergurt 2.1, der im Bereich des Stützvorrichtung 130 die Plane 1 verstärkt, verwendet werden, um daran Zurrmittel 3, wie in den Figu-ren 9 und 10 oder wie in den Figuren 1 bis 8 dargestellt, zu befestigen. Mittels einem oder mehreren Ladungssicherungsmitteln 30, die an den Zurrmitteln 3 befestigt werden und einen Formschluss mit der Teilladung 200 bilden, kann die Teilladung 200 gegen ein Verrutschen entgegen der Fahrtrichtung des Trailers gesichert werden. Die Ladungssicherungsmittel 30 werden dazu von einer Seite des Fahrzeuges zu der anderen Seite des Fahrzeuges zwischen den Seitenplanen 1.1 in dem von dem Aufbau 20 umschlossenen Innenraum verspannt.

Schließlich zeigt Figur 12 das Nutzfahrzeug 100 aus Figur 11 in einer Draufsicht von oben. Wie dargestellt, sind in Längsrichtung Y-Y des Fahrzeuges 100 bzw. der Seitenplanen 1.1 an dem mit den Planen 1.1 verschweißten Längsgurten 2.2 mit Abstand zueinander mehrere Zurrmittel 3 in Form von Schlaufen 4 aus den Längsgurten 2.2 gebildet. Die Gurte können anstelle einer Verschweißung mit der Plane 1 auch mit der Plane 1 verklebt sein. An dem in der Figur vor der hintern Kante der Teilladung 200 liegenden Zurrmittel 3, ist ein Ladungssicherungsmittel 30 in Form eines Spanngurtes mit Ratschenfunktion befestigt. Das Ladungssicherungsmittel 30 in Form des Spanngurtes vorliegend abschnittsweise parallel zu der Teilladung 200 auf beiden Seiten der Teilladung 200 geführt und bildet am hinteren Ende, welches in der Figur rechts liegt, mit der Teilladung 200 einen Formschluss, so dass die Teilladung 200 fest zwischen der Stirnwand 110 des Fahrzeuges 100 und dem Ladungssicherungsmittel 30, das an den aus den Längsgurten 2.2. gebildeten Zurrmittel 3 in Form von Schlaufen 4 eingespannt ist. Die Teilladung 200 ist auf diese Weise gegen ein Verrutschen entgegen der Fahrtrichtung des Fahrzeuges 100 durch das Ladungssicherungsmittel 30 und in Fahrtrichtung durch die Stirnwand 110 des Fahrzeuges 100 gesichert.

## Patentansprüche

1. Plane (1) mit zumindest einer Seitenplane (1.1) für einen Aufbau (20) eines Nutzfahrzeuges (100), insbesondere für den Aufbau (20) eines Trailers eines Sattelzuges, mit auf einer zur Fahrzeuginnenseite gerichteten Fläche der Seitenplane (1.1) aufgeschweißten Quergurten (2.1), Längsgurten (2.2) und/oder Diagonalgurten, welche zum Spannen der Seitenplane (1.1) und zur Verstärkung und zur Erhöhung der Festigkeit der Seitenplane (1.1) dienen, wobei zumindest ein mit der Seitenplane (1.1) verschweißter Längsgurt (2.2) und/oder zumindest ein Quergurt (2.1) Zurrmittel (3) umfasst, die zur Befestigung von Ladungssicherungsmitteln (30), insbesondere Spanngurte, dienen, wobei die Ladungssicherungsmittel (30) zum formschlüssigen Abspannen und zur Sicherung einer Ladung an den Zurrmitteln (3) befestigt werden können, **dadurch gekennzeichnet, dass** die Zurrmittel (3) in einem Abstand von 0,6 m bis 2,4 m zueinander in Längsrichtung (Y-Y) des Nutzfahrzeuges (100) an zumindest einem ersten Längsgurt (2.2) und/oder zumindest einem ersten Quergurt (2.1) auf der Seite einer ersten Seitenplane (1.1) eines Planenaufbaus (20) die zum Innenraum des Aufbaus (20) zeigt, angeordnet sind, und Zurrmittel (3) in dem gleichen Abstand von 0,6 m bis 2,4 m oder einem dazu anderen Abstand zueinander auf der anderen Seitenplane (1.1) des Aufbaus (20) auf der Seite der anderen Seitenplane (1.1), die zum Innenraum des Aufbaus (20) zeigt, an zumindest einem zweiten mit der Plane (1) verschweißten Längsgurt (2.2), der parallel zu dem ersten Längsgurt (2.2) angeordnet ist, und/oder an zumindest einem zweiten mit der Seitenplane (1.1) verschweißten Quergurt (2.1), der parallel zu dem ersten Quergurt angeordnet ist, angeordnet sind.

2. Plane (1) nach Anspruch 1, **dadurch gekennzeichnet, dass** die Zurrmittel (3) in Form von Schlaufen (4) ausgestaltet sind.

3. Plane (1) nach Anspruch 2, **dadurch gekennzeichnet, dass** die Schlaufen (4) als integrale Bestandteile mit dem Längsgurt (2.2) und/oder dem Quergurt (2.1) ausgestaltet sind.

4. Plane (1) nach Anspruch 2, **dadurch gekennzeichnet, dass** die Zurrmittel (3) in Form von den Schlaufen (4) aus dem Material des Längsgurtes (2.2) und/oder des Quergurtes (2.1) oder aus einem anderen zugfesten Material ausgestaltet sind, wobei die Zurrmittel (3) zumindest an dem mit der Plane (1) verschweißten Längsgurt (2.2) und/oder dem Quergurt (2.1) befestigt sind.

5. Plane (1) nach Anspruch 4, **dadurch gekennzeichnet, dass** die Zurrmittel (3) mit dem mit der Plane (1) verschweißten Längsgurt (2.2) und/oder dem Quergurt (2.1) vernäht sind und/oder mittels Befestigungselementen, insbesondere Nieten (5) oder Schraubverbindungen, an dem Längsgurt (2.2) und/oder dem Quergurt (2.1) befestigt sind.

6. Plane (1) nach Anspruch 1, **dadurch gekennzeichnet, dass** die Zurrmittel (3) Ösen, Ringe (7) oder Bügel (9) sind, an denen die Ladungssicherungsmittel (30) zum formschlüssigen Abspannen und zur Sicherung einer Ladung befestigt werden können.

7. Plane (1) nach einem der vorhergehenden Ansprüche, **dadurch gekennzeichnet, dass** mindestens zwei Längsgurte (2.2) auf den Seiten der ersten Seitenplanen (1.1), die zum Innenraum des Aufbaus (20) zeigen, übereinander liegend und mit Abstand zueinander mit den Seitenplanen (1.1) verschweißt sind.

8. Nutzfahrzeug (100) mit einem Aufbau (20), insbesondere Planenaufbau (20), insbesondere ein Trailer eines Sattelzuges, mit zumindest einer Seitenplane (1.1), die sich in Längsrichtung (Y-Y) des Nutzfahrzeuges (100) erstreckt, **dadurch gekennzeichnet, dass** die Seitenplane (1.1) nach einem der Ansprüche 1 bis 7 ausgestaltet ist.

9. Nutzfahrzeug (100) nach Anspruch 8, **gekennzeichnet durch** Ladungssicherungsvorrichtungen, die eine Sicherung von Getränkekisten oder einem anderen Ladungsgut in einer Vollbeladung oder als Teilladung (200) auf dem Nutzfahrzeug (100) erlauben, wobei die Ladungssicherungsvorrichtungen Ladungssicherungsmittel (30) und Zurrmittel (3) umfassen, wobei die Ladungssicherungsmittel (30) an den mit der Plane (1) verschweißten Gurten (2.1, 2.2) angeordneten Zurrmitteln (3) befestigt werden können.

## Claims

1. Tarpaulin (1) with at least one side tarpaulin (1.1) for a body (20) of a commercial vehicle (100), in particular for the body (20) of a trailer of an articulated lorry, with cross straps (2.1) welded onto a surface of the side tarpaulin (1.1) facing the inside of the vehicle, longitudinal straps (2.2) and/or diagonal straps welded onto a surface of the side tarpaulin (1.1) facing the interior of the vehicle, which serve to tension the side tarpaulin (1.1) and to reinforce and increase the strength of the side tarpaulin (1.1), wherein at least one longitudinal strap (2.2) welded to the side tarpaulin (1.1) and/or at least one cross strap (2.1) lashing means (3) which serve to fasten load securing means (30), in particular tensioning straps, wherein the load securing means (30) can be fastened to the lashing means (3) for form-fitting tensioning and securing of a load, **characterised in that** the lashing means (3) are arranged at a distance of 0.6 m to 2.4 m from each other in the longitudinal direction (Y-Y) of the commercial vehicle (100) on at least one first longitudinal strap (2.2) and/or at least one first transverse strap (2.1) on the side of a first side tarpaulin (1.1) of a tarpaulin body (20) facing the interior of the body (20), and lashing means (3) at the same distance of 0.6 m to 2.4 m or at a different distance from each other on the other side tarpaulin (1.1) of the body (20) on the side of the other side tarpaulin (1.1) facing the interior of the body (20), on at least one second longitudinal strap (2.2) welded to the tarpaulin (1), which is arranged parallel to the first longitudinal strap (2.2), and/or on at least one second transverse strap (2.1) welded to the side tarpaulin (1.1), which is arranged parallel to the first transverse strap.

2. Tarpaulin (1) according to claim 1, **characterised in that** the lashing means (3) are designed in the form of loops (4).

3. Tarpaulin (1) according to claim 2, **characterised in that** the loops (4) are designed as integral components with the longitudinal strap (2.2) and/or the transverse strap (2.1).

4. Tarpaulin (1) according to claim 2, **characterised in that** the lashing means (3) are designed in the form of loops (4) made of the material of the longitudinal strap (2.2) and/or the transverse strap (2.1) or another tensile material, wherein the lashing means (3) are attached at least to the longitudinal strap (2.2) and/or the transverse strap (2.1) welded to the tarpaulin (1).

5. Tarpaulin (1) according to claim 4, **characterised in that** the lashing means (3) are sewn to the longitudinal strap (2.2) and/or the transverse strap (2.1) welded to the tarpaulin (1) and/or are fastened to the longitudinal strap (2.2) and/or the transverse strap (2.1) by means of fastening elements, in particular rivets (5) or screw connections.

6. Tarpaulin (1) according to claim 1, **characterised in that** the lashing means (3) are eyelets, rings (7) or brackets (9) to which the load securing means (30) can be attached for form-fitting tensioning and securing of a load.

7. Tarpaulin (1) according to one of the preceding claims, **characterised in that** at least two longitudinal belts (2.2) are welded to the side tarpaulins (1.1) on the sides of the first side tarpaulins (1.1) facing the interior of the body (20), lying one above the other and spaced apart from each other.

8. Commercial vehicle (100) with a body (20), in particular a tarpaulin body (20), in particular a trailer of an articulated truck, with at least one side tarpaulin (1.1) extending in the longitudinal direction (Y-Y) of the commercial vehicle (100), **characterised in that** the side tarpaulin (1.1) is designed according to one of claims 1 to 7.

9. Commercial vehicle (100) according to claim 8, **characterised by** load securing devices that allow beverage crates or other cargo to be secured in a full load or as a partial load (200) on the commercial vehicle (100), wherein the load securing devices comprise load securing means (30) and lashing means (3), wherein the load securing means (30) can be attached to the lashing means (3) arranged on the straps (2.1, 2.2) welded to the tarpaulin (1).

## Revendications

1. Bâche (1) avec au moins une bâche latérale (1.1) pour une structure (20) d'un véhicule utilitaire (100), en particulier pour la structure (20) d'une remorque d'un semi-remorque, avec des sangles transversales (2.1) soudées sur une surface de la bâche latérale (1.1) tournée vers l'intérieur du véhicule, des sangles longitudinales (2.2) et/ou des sangles diagonales soudées sur une surface de la bâche latérale (1.1) orientée vers l'intérieur du véhicule, qui servent à tendre la bâche latérale (1.1) et à renforcer et augmenter la résistance de la bâche latérale (1.1), au moins une sangle longitudinale (2.2) soudée à la bâche latérale (1.1) et/ou au moins une sangle transversale (2.1) des moyens d'arrimage (3) qui servent à fixer des moyens de sécurisation de la charge (30), en particulier des sangles de tension, les moyens de sécurisation de la charge (30) pouvant être fixés aux moyens d'arrimage (3) pour tendre et sécuriser une charge par complémentarité de forme, **caractérisé en ce que** les moyens d'arrimage (3) sont disposés à une distance de 0,6 m à 2,4 m les uns des autres dans le sens longitudinal (Y-Y) du véhicule utilitaire (100) sur au moins une première sangle longitudinale (2.2) et/ou au moins une première sangle transversale (2.1) du côté d'une première bâche latérale (1.1) d'une structure à bâche (20) tournée vers l'intérieur de la structure (20), et des moyens d'arrimage (3) à la même distance de 0,6 m à 2,4 m ou à une autre distance l'un de l'autre sur l'autre bâche latérale (1.1) de la structure (20) du côté de l'autre bâche latérale (1.1) qui est orientée vers l'intérieur de la structure (20), sur au moins une deuxième sangle longitudinale (2.2) soudée à la bâche (1), qui est disposée parallèlement à la première sangle longitudinale (2.2), et/ou sur au moins une deuxième sangle transversale (2.1) soudée à la bâche latérale (1.1), qui est disposée parallèlement à la première sangle transversale.

2. Bâche (1) selon la revendication 1, **caractérisée en ce que** les moyens d'arrimage (3) sont conçus sous forme de boucles (4).

3. Bâche (1) selon la revendication 2, **caractérisée en ce que** les boucles (4) sont conçues comme des éléments intégrés à la sangle longitudinale (2.2) et/ou à la sangle transversale (2.1).

4. Bâche (1) selon la revendication 2, **caractérisée en ce que** les moyens d'arrimage (3) sont réalisés sous la forme de boucles (4) à partir du matériau de la sangle longitudinale (2.2) et/ou de la sangle transversale (2.1) ou d'un autre matériau résistant à la traction, les moyens d'arrimage (3) étant fixés au moins à la sangle longitudinale (2.2) et/ou à la sangle transversale (2.1) soudées à la bâche (1).

5. Bâche (1) selon la revendication 4, **caractérisée en ce que** les moyens d'arrimage (3) sont cousus à la sangle longitudinale (2.2) et/ou à la sangle transversale (2.1) soudées à la bâche (1) et/ou fixés à la sangle longitudinale (2.2) et/ou à la sangle transversale (2.1) à l'aide d'éléments de fixation, en particulier de rivets (5) ou des assemblages vissés, à la bande longitudinale (2.2) et/ou à la bande transversale (2.1).

6. Bâche (1) selon la revendication 1, **caractérisée en ce que** les moyens d'arrimage (3) sont des œillets, des anneaux (7) ou des étriers (9) auxquels les moyens de sécurisation du chargement (30) peuvent être fixés pour tendre et sécuriser un chargement par complémentarité de forme.

7. Bâche (1) selon l'une des revendications précédentes, **caractérisée en ce qu'**au moins deux sangles longitudinales (2.2) sont soudées aux bâches latérales (1.1) sur les côtés des premières bâches latérales (1.1) qui sont tournées vers l'intérieur de la structure (20), en étant superposées et espacées les unes des autres.

8. Véhicule utilitaire (100) avec une superstructure (20), en particulier une superstructure à bâche (20), en particulier une remorque d'un train routier, avec au moins une bâche latérale (1.1) qui s'étend dans la direction longitudinale (Y-Y) du véhicule utilitaire (100), **caractérisé en ce que** la bâche latérale (1.1) est conçue selon l'une des revendications 1 à 7.

9. Véhicule utilitaire (100) selon la revendication 8, **caractérisé par** des dispositifs de sécurisation du chargement qui permettent de sécuriser des caisses de boissons ou tout autre chargement dans un chargement complet ou partiel (200) sur le véhicule utilitaire (100), les dispositifs de sécurisation du chargement comprenant des moyens de sécurisation du chargement (30) et des moyens d'arrimage (3), les moyens de sécurisation de chargement (30) pouvant être fixés aux moyens d'arrimage (3) disposés sur les sangles (2.1, 2.2) soudées à la bâche (1).
